# EUROPÄISCHE PATENTANMELDUNG

(11) **EP 3 032 187 A1**
(43) Veröffentlichungstag der Anmeldung: **15.06.2016**
(21) Anmeldenummer: 15189273.4
(22) Anmeldetag: 12.10.2015
(51) Int. Cl.: F24J 2/46

(54) **KOLLEKTORBELÜFTUNGSVORRICHTUNG SOWIE KOLLEKTOR**

(30) Priorität: 11.12.2014 DE 102014225531
(71) Anmelder: ROBERT BOSCH GMBH, 70442 Stuttgart (DE)
(72) Erfinder: Otting, Herbert, 49832 Beesten (DE); Kosok, Juergen, 48565 Steinfurt (DE)

(57) **Zusammenfassung**

Die Erfindung betrifft eine Kollektorbelüftungsvorrichtung für einen Kollektor, bevorzugt einen thermischen Solarkollektor, zur Wärmeerzeugung, z. B. für eine Warmwasserbereitung und/oder eine Heizungsunterstützung, wobei die Kollektorbelüftungsvorrichtung eine bevorzugt von einem Gehäuse bzw. Rahmen des Kollektors unterschiedene Belüftungseinrichtung aufweist, und die Kollektorbelüftungsvorrichtung ferner eine Verschließeinrichtung aufweist, mittels welcher die Belüftungseinrichtung verschließbar und wieder freigebbar ist.

Ferner betrifft die Erfindung einen Kollektor, bevorzugt einen thermischen Solarkollektor, zur Wärmeerzeugung, z. B. für eine Warmwasserbereitung und/oder eine Heizungsunterstützung, wobei der Kollektor, bevorzugt der thermische Solarkollektor, insbesondere ein thermischer Flachkollektor, eine erfindungsgemäße Kollektorbelüftungsvorrichtung aufweist.

## Beschreibung

Die Erfindung betrifft eine Kollektorbelüftungsvorrichtung für einen Kollektor, bevorzugt einen thermischen Solarkollektor, zur Wärmeerzeugung, z. B. für eine Warmwasserbereitung und/oder eine Heizungsunterstützung. Hierbei ist die Kollektorbelüftungsvorrichtung insbesondere als eine Absorberdurchführungs-Belüftungsvorrichtung oder eine Kollektorgehäuse-Belüftungsvorrichtung ausgebildet. Ferner betrifft die Erfindung einen Kollektor, bevorzugt einen thermischen Solarkollektor, zur Wärmeerzeugung, z. B. für eine Warmwasserbereitung und/oder eine Heizungsunterstützung.

### Stand der Technik

Angesichts steigender Preise für fossile Energieträger und einer schwindenden Akzeptanz der Atomenergie kommt einer Nutzung regenerativer Energien in der Zukunft eine wachsende Bedeutung zu. So nutzt eine thermische Solarkollektoranlage die Sonnenenergie zur Wärmeerzeugung z. B. für eine Warmwasserbereitung und wahlweise auch zur Heizungsunterstützung, wobei solche Solarkollektoranlagen energiesparend und umweltschonend sind. Dies spart wertvolle Brennstoffe ein und schont die Umwelt durch weniger Schadstoffemissionen. In einer Solarkollektoranlage wird nicht nur die direkte Sonnenstrahlung in Wärme umgesetzt, sondern auch die diffuse Sonnenstrahlung kann durch die Solarkollektoranlage genutzt werden. So wirken an trüben Tagen mit einem hohen Anteil an diffusem Licht noch bis zu 300 W/m² auf einen Kollektor der Solarkollektoranlage.

Eine Warmwasserbereitung ist eine naheliegende Anwendung für Solarkollektoranlagen. Ein über das gesamte Jahr hinweg im Wesentlichen konstanter Warmwasserbedarf ist gut mit dem solaren Energieangebot kombinierbar. Im Sommer lässt sich der Energiebedarf für die Warmwasserbereitung nahezu vollständig von der Solarkollektoranlage abdecken. Ferner können Solarkollektoranlagen auch für die Heizungsunterstützung angewendet werden. Allerdings kann die Solarkollektoranlage hierfür nur dann Wärme abgeben, wenn eine Rücklauftemperatur einer Heizung niedriger ist als die Temperatur des oder der Solarkollektoren. Ideal hierfür sind deshalb großflächige Heizkörper mit niedrigen Systemtemperaturen oder Fußbodenheizungen. Bei entsprechender Auslegung deckt die Solarkollektoranlage einen nicht geringen Anteil der benötigten Gesamt-Jahreswärmeenergie für eine Warmwasserbereitung und eine Heizung ab.

Im Mittelpunkt einer jeden thermischen Solarkollektoranlage steht neben einem Speicher- oder Puffersystem ein Kollektor bzw. Solarkollektor. Dieser nimmt die Energie der einfallenden Sonnenstrahlen durch einen Absorber auf und wandelt die Energie in Wärme um. Eine durch die Rohre im Absorber fließende Wärmeträgerflüssigkeit, meist ein Gemisch aus Wasser und einem Frostschutzmittel, durchströmt den Absorber, erhitzt sich dabei und transportiert die Wärme z. B. zu einem Wärmetauscher, einem Speicher oder einem Verbraucher. Bei einem Kollektor ist es notwendig, eine entsprechende (Be-)Lüftung an/in einem Gehäuse des Kollektors vorzusehen, was mittels einer Kollektorbelüftungseinrichtung erfolgen kann.

Diese Belüftungsmöglichkeit hat den Hintergrund das ein Innendruck des Kollektors einem Außendruck angepasst wird. Zusätzlich übernimmt die Kollektorbelüftungseinrichtung die Aufgabe Feuchtigkeit aus einem z. B. beschlagenden Kollektor zu entfernen (Ausatmen). Eine solche Kollektorbelüftungseinrichtung ist z. B. eine einfache Durchgangsausnehmung z. B. in einem Rahmen des Kollektors. - Ferner benötigt ein Kollektor eine Durchführung für seinen Absorber. Diese dient einer Durchführung einer Hydraulikleitung durch das Gehäuse des Kollektors hindurch. Die Absorberdurchführung übernimmt dabei die Aufgabe einer Abdichtung des Gehäuses gegenüber der Hydraulikleitung und ermöglicht eine Kompensation von thermischen Ausdehnungen des Absorbers und/oder des Gehäuses.

### Aufgabenstellung

Es ist eine Aufgabe der Erfindung, eine verbesserte Belüftungsmöglichkeit für einen Kollektor, bevorzugt einen thermischen Solarkollektor, zur Wärmeerzeugung, z. B. für eine Warmwasserbereitung und/oder eine Heizungsunterstützung, sowie einen entsprechend verbesserten Kollektor anzugeben. Hierbei soll eine Kollektorbelüftungsvorrichtung angegeben werden, welche eine Variabilität bei der Belüftung des Kollektors erhöht. Ferner soll eine Kollektorbelüftungsvorrichtung angegeben werden, welche einen Eintrag von Windfrachten (Staub, Salz, Sand, Aerosole etc.) in den Kollektor wirksam verhindert und trotzdem eine Belüftung des Kollektors ermöglicht.

### Offenbarung der Erfindung

Die Aufgabe der Erfindung ist mittels einer Kollektorbelüftungsvorrichtung für einen Kollektor, bevorzugt einen thermischen Solarkollektor, zur Wärmeerzeugung, z. B. für eine Warmwasserbereitung und/oder eine Heizungsunterstützung, gemäß Anspruch 1; mittels einer Kollektorbelüftungsvorrichtung, insbesondere einer Absorberdurchführungs-Belüftungsvorrichtung, gemäß Anspruch 4; mittels einer Kollektorbelüftungsvorrichtung, insbesondere einer Kollektorgehäuse-Belüftungsvorrichtung, gemäß Anspruch 8; und mittels eines Kollektors, bevorzugt eines thermischen Solarkollektors, zur Wärmeerzeugung, z. B. für eine Warmwasserbereitung und/oder eine Heizungsunterstützung, gemäß Anspruch 13 gelöst. Vorteilhafte Weiterbildungen, zusätzliche Merkmale und/oder Vorteile der Erfindung ergeben sich aus den abhängigen Ansprüchen und der folgenden Beschreibung.

Die erfindungsgemäße Kollektorbelüftungsvorrichtung weist eine bevorzugt von einem Gehäuse bzw. einem Rahmen des Kollektors unterschiedene Belüftungseinrichtung auf, wobei die Kollektorbelüftungsvorrichtung ferner eine Verschließeinrichtung aufweist, mittels welcher die Belüftungseinrichtung verschließbar und wieder freigebbar ist. D. h. Belüftungseinrichtung ist bevorzugt nicht lediglich eine Durchgangsausnehmung im Gehäuse bzw. einem Rahmen des Kollektors. Gemäß der Erfindung kann die Verschließeinrichtung manuell, mittels eines Werkzeugs, automatisch, selbsttätig oder mittels eines Drucks betätigbar sein, wobei die Belüftungseinrichtung mittels der Verschließeinrichtung mehr- bzw. vielfach vollständig und/oder teilweise verschließbar bzw. mehr- bzw. vielfach teilweise und/oder vollständig freigebbar ist.

Die Kollektorbelüftungsvorrichtung kann dabei in einer Absorberdurchführung oder in einen Kollektorgehäuseabschnitt integriert sein. Dementsprechend ist die Verschließeinrichtung an/in der Absorberdurchführung oder am/im Kollektorgehäuseabschnitt vorsehbar. Hierbei ist die Belüftungseinrichtung in der Absorberdurchführung oder im Kollektorgehäuseabschnitt einrichtbar. Gemäß der Erfindung weist die Belüftungseinrichtung wenigstens eine Durchgangsausnehmung auf. Hierbei kann die Verschließeinrichtung ihrerseits keine oder wenigstens eine Belüftungseinrichtung aufweisen. - In den bevorzugten Varianten bzw. Ausführungsformen der Erfindung soll dabei eine Vorrichtung eine "kleinere" Einrichtung an/in ihr aufweisen und nicht umgekehrt. Dies betrifft z. B. eine Verschließ-Einrichtung und eine Belüftungs-Einrichtung in der Kollektorbelüftungs-Vorrichtung.

Bei der erfindungsgemäßen Kollektorbelüftungsvorrichtung, insbesondere der erfindungsgemäßen Absorberdurchführungs-Belüftungsvorrichtung (erste Variante), weist die Absorberdurchführung die Belüftungseinrichtung auf, wobei an der Absorberdurchführung die Verschließeinrichtung vorgesehen ist, mittels welcher die Belüftungseinrichtung verschließbar und wieder freigebbar ist. Hierbei kann die Verschließeinrichtung als eine Einstellscheibe ausgebildet sein, welche in wenigstens einer Nut der Absorberdurchführung bezüglich der Absorberdurchführung verdrehbar aufgenommen ist. Ein Nutgrund der Nut und ein betreffender Rand der Verschließeinrichtung können dabei zueinander komplementäre Verzahnungen aufweisen.

Gemäß der Erfindung kann die Verschließeinrichtung ebenfalls eine Belüftungseinrichtung aufweisen, wobei für ein Belüften des Kollektors die Belüftungseinrichtung der Verschließeinrichtung wenigstens teilweise zur Deckung mit der Belüftungseinrichtung der Absorberdurchführung bringbar ist. Hierbei können die beiden Belüftungseinrichtungen auf einem im Wesentlichen selben Radius bzw. Durchmesser angeordnet sein und sich die jeweilige Belüftungseinrichtung länglich in eine Umfangsrichtung der Verschließeinrichtung und der Absorberdurchführung erstrecken. Hierbei weist die Belüftungseinrichtung wenigstens eine Durchgangsausnehmung, bevorzugt jedoch eine Mehrzahl von Durchgangsausnehmungen, auf.

In Ausführungsformen der Erfindung weist die Absorberdurchführung zwei Belüftungseinrichtungen auf, wobei die erste Belüftungseinrichtung einer Belüftung eines Raums oberhalb eines Sammelrohrs oder eines Absorbers im Kollektor und die zweite Belüftungseinrichtung einer Belüftung eines Raums unterhalb des Sammelrohrs oder des Absorbers im Kollektor dient. Die Verschließeinrichtung kann dabei wenigstens zwei Belüftungseinrichtungen derart aufweisen, dass mittels der Verschließeinrichtung keine, eine oder beide Belüftungseinrichtungen vollständig und/oder teilweise verschließbar bzw. teilweise und/oder vollständig freigebbar sind.

Die Absorberdurchführung ist bevorzugt aus einem Gummi oder einem mit Gummi vergleichbaren Material hergestellt. Ferner ist die Verschließeinrichtung bevorzugt aus einem Gummi oder einem mit Gummi vergleichbaren, härteren Material hergestellt. Die Absorberdurchführung kann als ein im Wesentlichen kreisrundes Bauteil ausgebildet sein, wobei andere Formen, wie ein Rechteck, eine Ellipse oder eine beliebige Form natürlich anwendbar sind. Des Weiteren weist die Absorberdurchführung im Wesentlichen mittig eine Sammelrohrdurchführung auf. - Eine weitere Möglichkeit ist die, dass das Gehäuse bzw. der Rahmen die Belüftungseinrichtung bzw. die Durchgangsausnehmung(en) aufweist und die Verschließeinrichtung bzw. Einstellscheibe am Gehäuse bzw. Rahmen vorgesehen ist. D. h. die Absorberdurchführung ist durch das Gehäuse bzw. den Rahmen ersetzt.

Bei der erfindungsgemäßen Kollektorbelüftungsvorrichtung, insbesondere der erfindungsgemäßen Kollektorgehäuse-Belüftungsvorrichtung (zweite Variante), ist im Kollektorgehäuseabschnitt die Belüftungseinrichtung vorgesehen und am/im Kollektorgehäuseabschnitt die Verschließeinrichtung vorgesehen, mittels welcher die Belüftungseinrichtung verschließbar und wieder freigebbar ist. Hierbei kann die Verschließeinrichtung als ein Verschlusskörper ausgebildet sein, welcher in Abhängigkeit einer bestimmten Kraft am Verschlusskörper die Belüftungseinrichtung verschließt bzw. wieder freigibt. Gemäß der Erfindung kann die Belüftungseinrichtung als eine Durchgangsausnehmung des Kollektorgehäuseabschnitts oder eines Rahmens ausgebildet sein.

Bevorzugt sind die Belüftungseinrichtung und die Verschließeinrichtung in dem im Kollektorgehäuseabschnitt vorsehbaren Rahmen eingerichtet. Die bestimmte Kraft am Verschlusskörper ist bevorzugt derart gewählt, dass ein Verschließen der Belüftungseinrichtung lediglich durch eine Kraft auslösbar ist, welche aus einer Windgeschwindigkeit resultiert, welche eine Windfracht ermöglicht. Gemäß der Erfindung kann in Abhängigkeit der bestimmten Kraft am Verschlusskörper, der Verschlusskörper an einem Ventilsitz des Kollektorgehäuseabschnitts oder des Rahmens im Wesentlichen oder hauptsächlich dichtend zur Anlage bringbar sein, wodurch ein Innenraum des Kollektors im Wesentlichen oder hauptsächlich gegen eine Windfracht geschützt ist. D. h. ferner, dass durch den Verschlusskörper in einer Ruheposition (vergleichsweise geringe Windgeschwindigkeiten bzw. ein vergleichsweise geringer Druckunterschied am Verschlusskörper) die Belüftungseinrichtung freigegeben ist.

In Ausführungsformen der Erfindung kann der Verschlusskörper als ein hin- und her bewegbares, bevorzugt bidirektional wirkendes Ventilglied ausgebildet sein, das mittels wenigstens einer Feder gegen einen Ventilsitz mechanisch vorgespannt ist. Hierbei kann das Ventilglied von zwei Federn gegen zwei Ventilsitze mechanisch vorgespannt sein. Ferner kann das Ventilglied von den zwei Federn in der Kollektorbelüftungsvorrichtung gelagert sein. - Darüber hinaus kann in Ausführungsformen der Erfindung der Verschlusskörper als eine hin- und her schwenkbare, bevorzugt bidirektional wirkende Ventilplatte ausgebildet sein, die durch eine innere mechanische Spannung gegen einen Ventilsitz mechanisch vorgespannt ist. Bevorzugt ist die Ventilplatte im Kollektorgehäuseabschnitt oder im Rahmen gelagert, insbesondere eingespannt. - Es kann aber auch ein monodirektional wirkender Verschlusskörper vorgesehen sein.

Es sei darauf hingewiesen, dass die erste Variante der Erfindung auch in ein Gehäuse bzw. einen Rahmen des Kollektors, also in einen Kollektorgehäuseabschnitt abseits der Absorberdurchführung integrierbar ist. Hierbei übernimmt dann der Kollektorgehäuseabschnitt die Belüftung, welche vormals durch die Absorberdurchführung realisiert wurde. - Ferner ist die zweite Variante der Erfindung auch in eine Absorberdurchführung des Kollektors, also abseits des Kollektorgehäuseabschnitts bzw. des Gehäuses oder des Rahmens des Kollektors, integrierbar. Hierbei übernimmt dann die Absorberdurchführung eine Abschirmung eines Innenraums des Kollektors gegenüber Windfrachten.

Der erfindungsgemäße Kollektor weist eine erfindungsgemäße Kollektorbelüftungsvorrichtung, insbesondere eine erfindungsgemäße AbsorberdurchführungBelüftungsvorrichtung und/oder eine erfindungsgemäße KollektorgehäuseBelüftungsvorrichtung auf. Hierbei kann der Kollektor als ein Aufdach-Kollektor, ein Indach-Kollektor, ein Flachdach-Kollektor, ein Ständer-Kollektor, ein Aufständer-Kollektor oder ein Fassaden-Kollektor ausgebildet sein. Der Kollektor kann dabei als ein Mäander-Kollektor, ein Harfen-Kollektor oder ein flächendurchströmter Kollektor konzipiert sein. Gemäß der Erfindung ist der Kollektor oder ein Bestandteil davon bevorzugt als ein Flachkollektor ausgebildet. Hierbei kann der Kollektor wenigstens ein Kollektormodul, insbesondere wenigstens ein Solarmodul, aufweisen.

### Kurzbeschreibung der Zeichnung

Die Erfindung ist im Folgenden anhand von Ausführungsbeispielen zweier Varianten unter Bezugnahme auf die beigefügte schematische und nicht maßstabsgetreue Zeichnung näher erläutert. Elemente, Bauteile oder Komponenten, welche eine identische, univoke oder analoge Ausbildung und/oder Funktion besitzen, sind in der Figurenbeschreibung und den Patentansprüchen mit denselben Bezugszeichen versehen und in den Figuren der Zeichnung mit denselben Bezugszeichen gekennzeichnet.

Sämtliche erläuterten Merkmale sind nicht nur in der angegebenen Kombination bzw. den angegebenen Kombinationen, sondern auch in einer anderen Kombination bzw. anderen Kombinationen oder in Alleinstellung anwendbar. Insbesondere ist es möglich, anhand der Bezugszeichen und den diesen zugeordneten Merkmalen in der Beschreibung der Erfindung und/oder der Figurenbeschreibung ein Merkmal oder eine Mehrzahl von Merkmalen in der Beschreibung der Erfindung und/oder der Figurenbeschreibung zu ersetzen. Ferner kann dadurch ein Merkmal oder können eine Mehrzahl von Merkmalen in den Patentansprüchen ausgelegt, näher spezifiziert und/oder substituiert werden. - In den Figuren (Fig.) der Zeichnung zeigen:
- Fig. 1: in einer stirnseitigen Perspektivansicht eine Absorberdurchführung mit einer Belüftungseinrichtung für einen Kollektor;
- Fig. 2: die Absorberdurchführung in einer zentral geschnittenen, zweidimensionalen Seitenansicht;
- Fig. 3: in einer stirnseitigen Perspektivansicht eine Verschließeinrichtung für die Belüftungseinrichtung der Absorberdurchführung;
- Fig. 4: in einer seitlich zentral geschnittenen, stirnseitigen Perspektivansicht eine Montageposition der Verschließeinrichtung an der Absorberdurchführung, welche eine bevorzugte erste Variante der Kollektorbelüftungsvorrichtung konstituieren;
- Fig. 5: die Kollektorbelüftungsvorrichtung aus der Fig. 4 bei einem Belüften eines Innenraums des Kollektors oberhalb eines Absorbers des Kollektors;
- Fig. 6: nochmals die Kollektorbelüftungsvorrichtung aus der Fig. 4 beim Belüften eines Innenraums des Kollektors unterhalb des Absorbers;
- Fig. 7: wiederum die Kollektorbelüftungsvorrichtung aus der Fig. 4 beim Belüften der Innenräume des Kollektors oberhalb und unterhalb des Absorbers;
- Fig. 8: erneut die Kollektorbelüftungsvorrichtung aus der Fig. 4 bei einem teilweisen Belüften der Innenräume des Kollektors oberhalb und unterhalb des Absorbers;
- Fig. 9: eine weggebrochene und geschnittene, zweidimensionale Seitenansicht eines Kollektors mit einer in einem Gehäuse bzw. in einem Rahmen des Kollektors montierten bevorzugten zweiten Variante der Kollektorbelüftungsvorrichtung;
- Fig. 10: in einer zentralen, zweidimensionalen Schnittansicht eine erste bevorzugte Ausführungsform der erfindungsgemäßen Kollektorbelüftungsvorrichtung; und
- Fig. 11: in einer zur Fig. 10 analogen Darstellung eine zweite bevorzugte Ausführungsform der erfindungsgemäßen Kollektorbelüftungsvorrichtung.

### Ausführungsformen der Erfindung

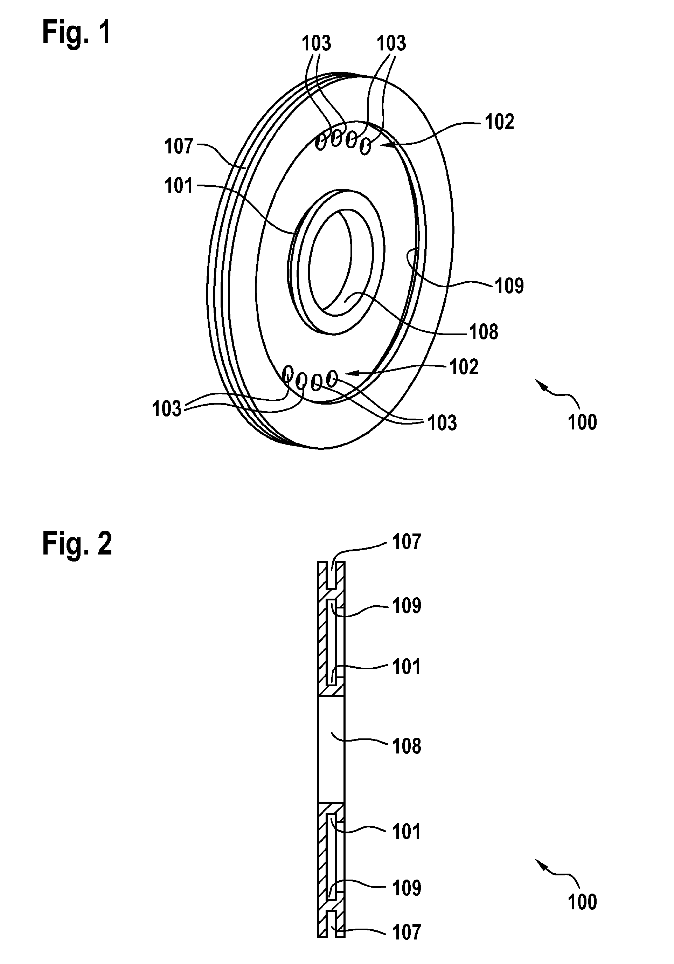

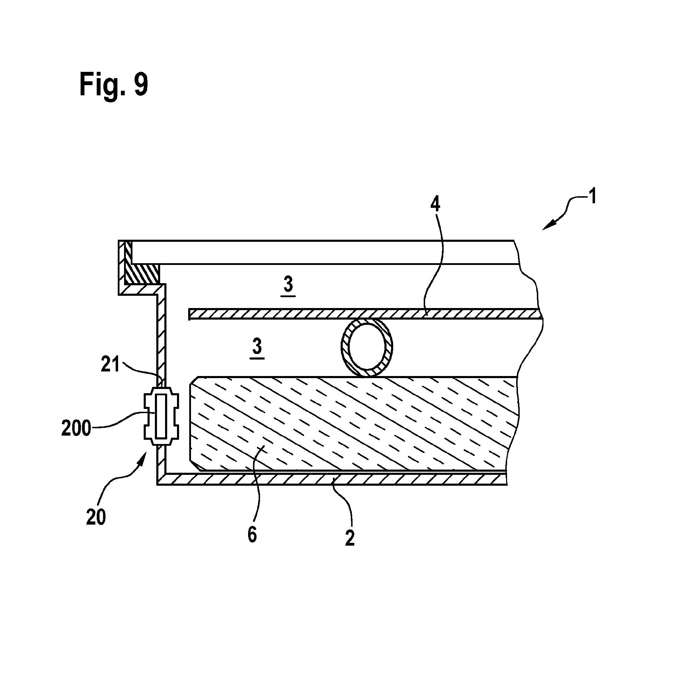

Die Erfindung ist im Folgenden anhand von Ausführungsformen zweier Varianten von Kollektorbelüftungsvorrichtungen 10, 20 (vgl. die Fig. 1 bis 8 und 9 bis 11) für einen als Flachkollektor 1 ausgebildeten Kollektor 1 (vgl. Fig. 9) näher erläutert. Die Erfindung ist jedoch nicht auf eine solche Variante und/oder die nachfolgend erläuterten Ausführungsformen beschränkt, sondern ist von grundlegenderer Natur, sodass sie auf sämtliche Kollektoren 1 im Sinne der Erfindung angewendet werden kann, wie z. B. einen thermischen/elektrischen Kollektor 1, ein Kollektormodul 1, einen Solar-/Photovoltaikkollektor 1, ein Solar/Photovoltaikmodul 1, eine Kollektoranlage 1, eine Solar/Photovoltaikanlage 1 etc. - Obwohl die Erfindung im Detail durch bevorzugte Ausführungsformen näher beschrieben und illustriert ist, so ist die Erfindung nicht durch diese offenbarten Beispiele eingeschränkt. Andere Variationen können hieraus abgeleitet werden ohne den Schutzumfang der Erfindung zu verlassen.

Eine Baugruppe der ersten Variante der Kollektorbelüftungsvorrichtung 10 weist zwei Einzelteile 100, 110 auf, wobei die Kollektorbelüftungsvorrichtung 10 als eine Absorberdurchführungs-Belüftungsvorrichtung 10 konzipiert ist (vgl. Fig. 1 bis 8). Es ist natürlich möglich, diese Variante der Erfindung auch auf ein Gehäuse 2 (Kollektorgehäuseabschnitt 21), einen Rahmen 2 (vgl. Fig. 9) oder ein anderes (Zusatz-)Bauteil des Kollektors 1 anzuwenden. - Die Fig. 1 und 2 zeigen eine Absorberdurchführung 100, die als ein rundes Einzelteil 100 dargestellt ist. Es sind natürlich die unterschiedlichsten Formen für die Absorberdurchführung 100 anwendbar. Eine bevorzugt vollständig umlaufende Montagenut 107 in einem Außenbereich der Absorberdurchführung 100 ist für eine Abdichtung mit dem Gehäuse 2 vorgesehen. Die Absorberdurchführung 100 kann ein gummiartiges Bauteil sein, was aber nicht zwingend erforderlich ist.

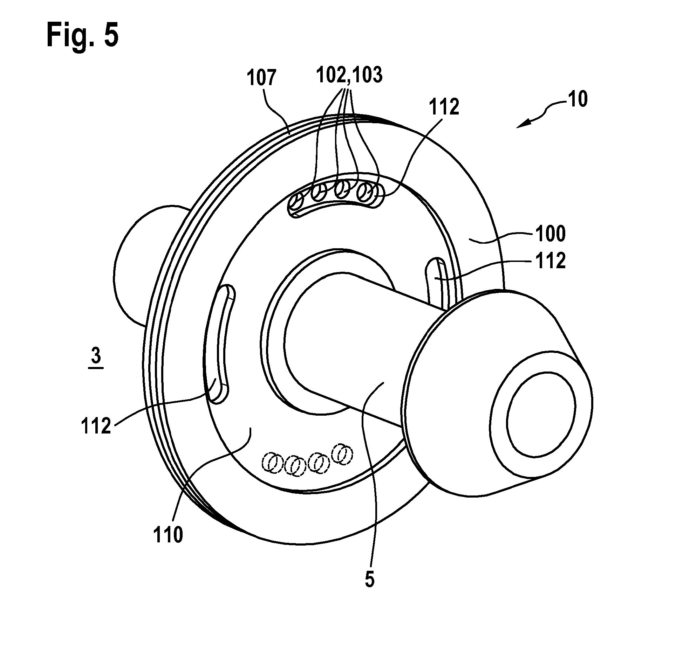

Die Absorberdurchführung 100 ist bevorzugt als ein extra Bauteil 100 konzipiert, dass an/in das Gehäuse 2, den Rahmen 2 oder ein anderes (Zusatz-)Bauteil des Kollektors 1 eingebaut wird bzw. ist. Bevorzugt in einem Zentrum der Absorberdurchführung 100 ist eine Sammelrohrdurchführung 108 vorgesehen, in welcher ein Sammelrohr 5 (siehe Fig. 5 bis 8) des Kollektors 1 bzw. der Kollektoranlage 1 insbesondere gegenüber der eigentlichen Absorberdurchführung 100 gedichtet aufgenommen werden kann. Die Absorberdurchführung 100 ist, abgesehen von einer oder einer Mehrzahl von Einrichtungen zum Haltern einer Verschließeinrichtung 110 für die Absorberdurchführungs-Belüftungsvorrichtung 10, im Wesentlichen scheibenförmig ausgebildet.

Die erfindungsgemäße Absorberdurchführung 100 weist eine freiwählbare Anzahl von Durchgangsausnehmungen 103 auf, die sich zu einer oder einer Mehrzahl von Belüftungseinrichtungen 102 organisieren. Statt einer Mehrzahl von Durchgangsausnehmungen 103 für eine einzelne Belüftungseinrichtung 102 kann auch eine in Umfangsrichtung langgestreckte Durchgangsausnehmung 103 analog zu einer Belüftungseinrichtung 112 der Verschließeinrichtung 110 (siehe unten) angewendet werden. Eine Form und Lage der Durchgangsausnehmungen 103 ist ebenfalls frei wählbar. In einem Bereich radial an bzw. abseits der Belüftungseinrichtungen 102 sind bevorzugt zwei, bevorzugt vollständig umlaufende Nuten 101, 109 vorgesehen, um die Verschließeinrichtung 110 der Kollektorbelüftungsvorrichtung 10 aufzunehmen.

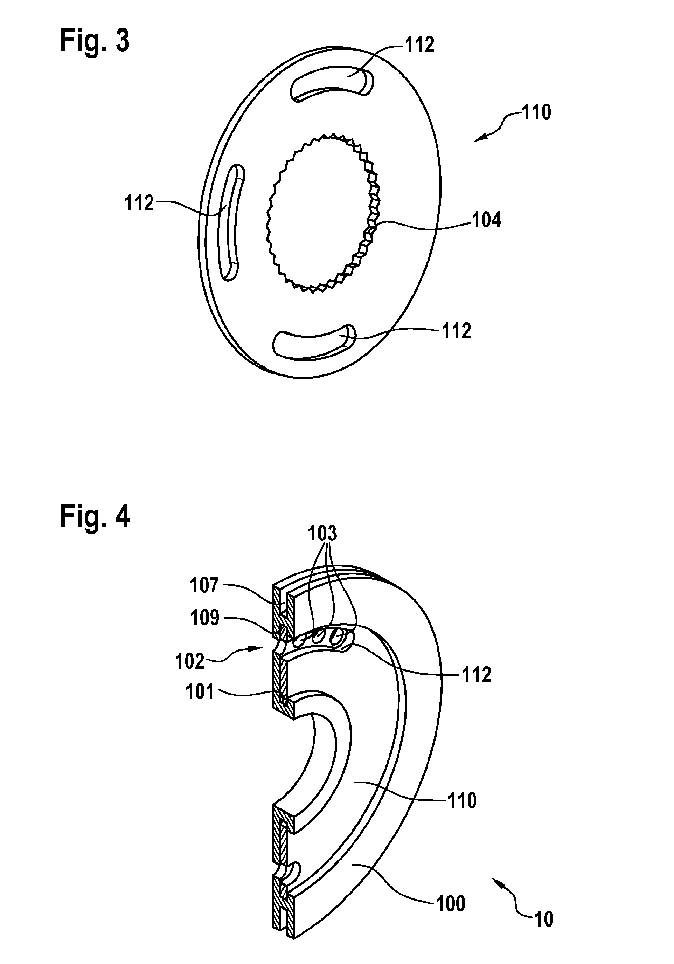

Im Nutgrund und/oder an den Nutflanken einer oder beider Nuten 101, 109 kann eine Verzahnung 104 oder eine ähnliche Einrichtung vorgesehen sein (lediglich für die Verschließeinrichtung 110 in der Fig. 3 am inneren Durchmesser dargestellt; eine zusätzliche oder alternative mögliche Verzahnung an einem äußeren Durchmesser ist nicht dargestellt). Die Verzahnung 104 dient z. B. zusammen mit einer dazu komplementären Verzahnung oder einer ähnlichen Einrichtung der Verschließeinrichtung 110 einem dauerhaften Verrasten der Verschließeinrichtung 110 in/auf der Absorberdurchführung 100, wodurch ein genaues Einstellen der Verschließeinrichtung 110 möglich ist und ein unbeabsichtigtes Verdrehen der Verschließeinrichtung 110 vermieden werden kann. Die Verschließeinrichtung 110 ist wahlweise ein vergleichsweise gummiartiges oder ein hartes Bauteil 110, je nach einem Anwendungsfall.

In der Fig. 3 ist die als eine Einstellscheibe 110 konzipierte Verschließeinrichtung 110 für ein Einstellen einer Belüftungsrate des Kollektors 1 zu erkennen. Die Einstellscheibe 110 hat ebenfalls eine frei wählbare Anzahl von Durchgangsausnehmungen 112 (Belüftungseinrichtungen 112). Eine Form und eine Lage der Durchgangsausnehmungen 112 bzw. Belüftungseinrichtungen 112 ist auf die Durchgangsausnehmungen 103 der Absorberdurchführung 100 abgestimmt. Denkbar statt einfachen Durchgangsausnehmungen 112 ist auch eine Kiemenform der Durchgangsausnehmungen 112 um einen Luftstrom entsprechend abzulenken. Mittels einer Kiemenform über den Durchgangsausnehmungen 112 kann ein direkter Luftaustausch verhindert werden, wobei z. B. eine verschmutzte Luft umgelenkt (Labyrinth) wird und z. B. Sandkörner nicht in den Kollektor 1 eindringen können.

Eine Geometrie, welche eine Möglichkeit schafft, die Verschließeinrichtung 110 in/an der Absorberdurchführung 100 zu verdrehen, ist in den betreffenden Fig. 1 bis 8 nicht dargestellt. Dies kann z. B. eine Bohrung für ein Werkzeug oder eine Pinne, eine Rippe oder ein Zapfen zum manuellen Verdrehen der Verschließeinrichtung 110 sein. - Die Fig. 4 zeigt einen Zusammenbau der Absorberdurchführung 100 mit der Verschließeinrichtung 110, wobei die Durchgangsausnehmungen 103 bzw. die Belüftungseinrichtung 102 der Absorberdurchführung 100 mit der Belüftungseinrichtung 112 der Verschließeinrichtung 110, sowie die Verzahnung 104 (Fig. 3) der Absorberdurchführung 100 und die Verzahnung (nicht dargestellt) der Verschließeinrichtung 110, insbesondere in Radialrichtung und/oder in Umfangsrichtung, aufeinander abgestimmt sind.

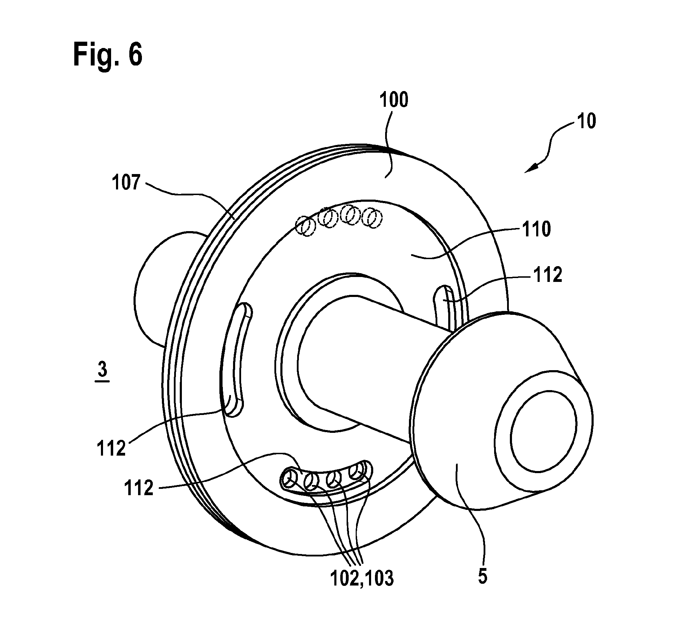

Die Fig. 5 zeigt ferner das in der Absorberdurchführung 100 vorgesehene Sammelrohr 5 des Kollektors 1. Eine Belüftung des Kollektors 1 ist mittels der Kollektorbelüftungsvorrichtung 10 derart eingestellt, dass ein Luftstrom oberhalb des Sammelrohrs 5 bzw. oberhalb eines Absorbers 4 (vgl. Fig. 9) bzw. eines Absorberblechs 4 in den Kollektor 1 ein- bzw. austreten kann. Durch eine solche Einstellung kann in bestimmten Umgebungen Schmutz auf den Absorber 4 gelangen, welcher optisch störend wirkt und ggf. eine Funktionalität des Kollektors 1 beeinträchtigen kann. In der zur Fig. 5 analogen Darstellung der Fig. 6 ist die Kollektorbelüftungsvorrichtung 10 derart eingestellt, dass der Luftstrom unterhalb des Sammelrohrs 5 bzw. unterhalb des Absorbers 4 bzw. des Absorberblechs 4 in den Kollektor 1 ein- bzw. aus diesem austreten kann. Dies ist eine weitere erfindungsgemäße Einstellung für einen belüfteten Kollektor 1. Eine solche Einstellung ist für z. B. für Küsten- oder Wüstenregionen geeignet, wo durch einen Luftstrom Sand in den Kollektor 1 getragen werden kann.

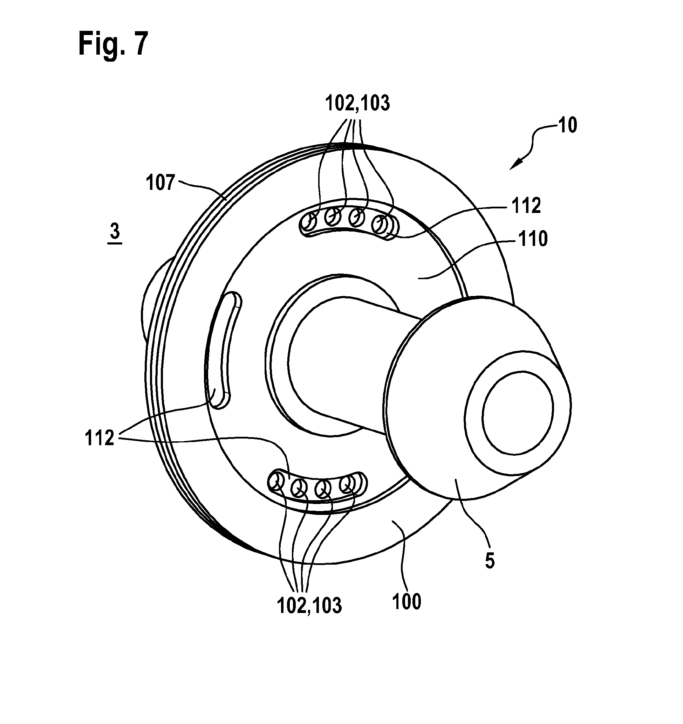

In der ebenfalls zu Fig. 5 analogen Darstellung der Fig. 7 ist die Kollektorbelüftungsvorrichtung 10 derart eingestellt, dass ein Luftstrom oberhalb und unterhalb des Sammelrohrs 5 bzw. oberhalb und unterhalb des Absorbers 4 bzw. des Absorberblechs 4 in den Kollektor 1 ein- bzw. austreten kann. Dies ist eine weitere erfindungsgemäße Einstellung für einen belüfteten Kollektor 1. Eine solche Einstellung ist z. B. für eine Dachintegrationsinstallation geeignet, wo ein Montagesystem einen äußeren Luftstrom behindert und durch eine große Anzahl von frei liegenden Durchgangsausnehmungen 103 der Absorberdurchführung 100 die notwendige Belüftungsrate gewährleistet ist.

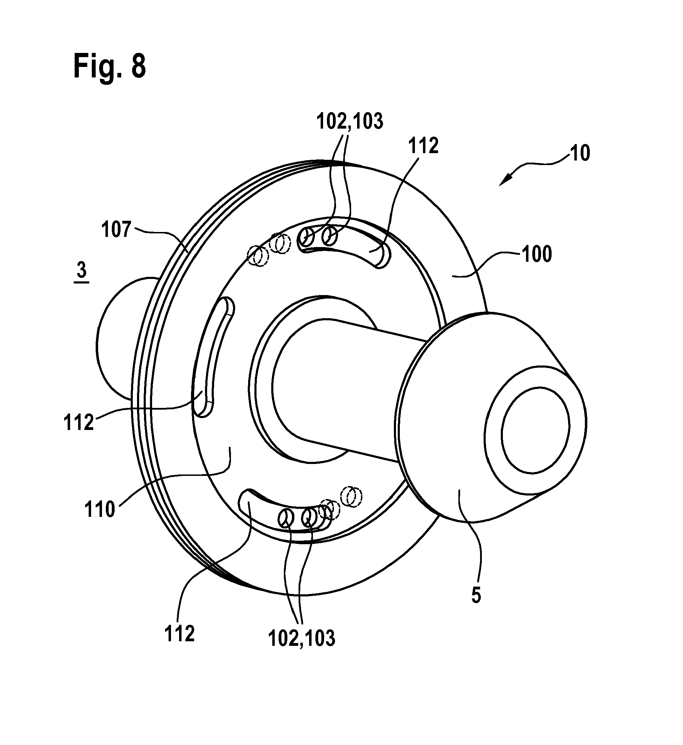

In der wiederum zur Fig. 5 analogen Darstellung der Fig. 8 ist die Kollektorbelüftungsvorrichtung 10 derart eingestellt, dass ein Luftstrom oberhalb und unterhalb des Sammelrohrs 5 bzw. oberhalb und unterhalb des Absorbers 4 bzw. des Absorberblechs 4 in den Kollektor 1 ein- bzw. austreten kann, wobei jeweils nur ein Anteil der Durchgangsausnehmungen 103 der betreffenden Belüftungseinrichtung 102 freigegeben ist. Durch eine reduzierte Anzahl der freiliegenden Durchgangsausnehmungen 103 der Absorberdurchführung 100 ist eine zu oben unterschiedliche Belüftungsrate einstellbar. Dies ist wiederum eine erfindungsgemäße Einstellung für einen belüfteten Kollektor 1.

Gemäß der Erfindung kann die Absorberdurchführung 100 mit ihren bevorzugt wenigstens zwei Belüftungseinrichtungen 102, 102 (jeweils: eine Durchgangsausnehmung 103, eine Mehrzahl von Durchgangsausnehmungen 103, ein Umfangslangloch, eine Mehrzahl von Umfangslanglöchern, ein Cluster von Durchgangsausnehmungen etc.) derart in den Kollektor 1 eingebaut sein, dass die eine Belüftungseinrichtung 102 einer Belüftung eines oberen (Fig. 5) Innenraums 3 (vgl. Fig. 9) des Kollektors 1 und die zweite Belüftungseinrichtung 102 einer Belüftung eines unteren (Fig. 5) Innenraums 3 des Kollektors 1 dient. Der obere Innenraum 3 liegt dabei bevorzugt oberhalb des Sammelrohrs 5, des Absorbers 4 bzw. des Absorberblechs 4 und der untere Innenraum 3 liegt dabei bevorzugt unterhalb des Sammelrohrs 5, des Absorbers 4 bzw. des Absorberblechs 4 im Kollektor 1.

Hierbei liegen die Belüftungseinrichtungen 102, 102 bevorzugt im Wesentlichen auf einem Radius der Absorberdurchführung 100 und erstrecken sich bevorzugt um eine selbe Länge in Umfangsrichtung der Absorberdurchführung 100. Dies kann natürlich auch anders ausgebildet sein. Ferner ist bevorzugt, dass die Verschließeinrichtung 110 wenigstens eine, bevorzugt jedoch wenigstens zwei zu einer einzelnen Belüftungseinrichtung 102 der Absorberdurchführung 100 korrespondierende Belüftungseinrichtungen 112, 112 (jeweils: eine Durchgangsausnehmung 103, eine Mehrzahl von Durchgangsausnehmungen 103, ein Umfangslangloch, eine Mehrzahl von Umfangslanglöchern, ein Cluster von Durchgangsausnehmungen etc.) aufweist.

Bei der vorliegenden Geometrie führt das bei zwei Belüftungseinrichtungen 102, 102 der Absorberdurchführung 100 zu drei Belüftungseinrichtungen 112, 112, 112 der Verschließeinrichtung 110, wobei die mittlere Belüftungseinrichtung 112 der Verschließeinrichtung 110 je nach einer Verdrehstellung der Verschließeinrichtung 110 an/in der Absorberdurchführung 100 für zwei Belüftungseinrichtungen 102, 102 der Absorberdurchführung 100 relevant sein kann. Hierbei sind die zwei Belüftungseinrichtungen 102, 102 der Absorberdurchführung 100 im Wesentlichen um 180° und die drei Belüftungseinrichtungen 112, 112, 112 der Verschließeinrichtung 110 im Wesentlichen um jeweils 90° versetzt zueinander angeordnet, wobei die zwei umfangsäußeren Belüftungseinrichtungen 112, 112 im Wesentlichen um 180° versetzt zueinander angeordnet sind.

Es ist natürlich möglich, eine Vielzahl anderer Ausführungsformen mit ggf. teilweise identischen und/oder ggf. teilweise unterschiedlich geformten Belüftungseinrichtungen 102, 102, ...; 112, 112, ... auf gemeinsamen und/oder unterschiedlichen Radien zu kreieren, welche in einer Vielzahl von möglichen Kombinationen in eine ggf. teilweise Deckung für eine Belüftung eines Innenraums 3, 3, ... eines Kollektors 1 gebracht werden können. Obige Angaben sind daher nur beispielhaft. - Gemäß der Erfindung ist die erste Variante der Kollektorbelüftungsvorrichtung 10 nicht nur auf eine Absorberdurchführung 100 beschränkt, sondern die erste Variante ist auch ganz allgemein als eine Belüftung an einem Kollektor 1 realisierbar, hierbei wird die Absorberdurchführung 100 durch ein anderes Bauteil 200 (= Pos. 100) realisiert oder einen Abschnitt 21 (= Pos. 100) des Gehäuses 2 bzw. des Rahmens 2 ersetzt.

Gemäß der Erfindung erfüllt eine Absorberdurchführung in einem Bauteil zwei Funktionen für einen Kollektor (Funktionszusammenlegung in einem Bauteil), nämlich die einer Hydraulikdurchführung und die eines Feuchtigkeitsmanagements. Hierbei sind die Durchgänge in der Absorberdurchführung für die Belüftung des Kollektors fein einstellbar. Gemäß der Erfindung kann eine Belüftungsebene im Kollektor gewählt und eine Belüftungsrate im Kollektor eingestellt werden. Dies kann in Ausführungsformen der Erfindung unabhängig voneinander erfolgen (unterschiedliche Radien der Durchgänge für die Innenräume des Kollektors). Länderspezifische Unterschiede im Feuchtigkeitsmanagement sind gemäß der Erfindung einstellbar. Bei Problemanlagen ist durch einen Kundendienst eine geeignete Belüftungsrate einfach einstellbar.

Gemäß der Erfindung ist es jedoch auch möglich, die Erfindung statt mittels der Absorberdurchführung 100 als einem extra Bauteil, auch mittels des Gehäuses 2 bzw. Rahmens 2 des Kollektors 1 zu realisieren (nicht dargestellt). D. h. alternativ oder zusätzlich weist das Gehäuse 2 und/oder der Rahmen 2 die Belüftungseinrichtung 102 bzw. die Durchgangsausnehmung(en) 103 auf, wobei dann die Verschließeinrichtung 110 bzw. die Einstellscheibe 110 am Gehäuse 2 bzw. Rahmen 2 vorgesehen ist. Hierbei kann die Verschließeinrichtung 110 auch mittels eines einfachen Drehgelenks oder eines anderen Lagers am Gehäuse 2 bzw. Rahmen 2 vorgesehen sein. D. h. das Gehäuse 2 bzw. der Rahmen 2 ist gemäß der Erfindung wie die Absorberdurchführung 100 ausgestaltet, ohne dass das Gehäuses 2 bzw. der Rahmen 2 eine außerhalb der Erfindung liegende Aufgabe der Absorberdurchführung 100 erfüllt, also insbesondere keine Sammelrohrdurchführung 108 aufweist.

Eine Baugruppe der zweiten Variante der Kollektorbelüftungsvorrichtung 20 weist bevorzugt zwei Einzelteile 200, 210 auf, wobei die Kollektorbelüftungsvorrichtung 20 als eine Kollektorgehäuse-Belüftungsvorrichtung 20 konzipiert ist (vgl. Fig. 9 bis 11). Es ist natürlich möglich, diese Variante der Erfindung auch auf ein Gehäuse 2 (Kollektorgehäuseabschnitt 21), einen Rahmen 2 (vgl. Fig. 9) bzw. die Absorberdurchführung 100 des Kollektors 1 anzuwenden. - Im Stand der Technik (nicht dargestellt) wird hierfür eine einfache Durchgangsausnehmung (Belüftungseinrichtung) in einem Gehäuse bzw. in einem Rahmen angewendet, wobei bei Windfrachten Staub, Salz und/oder Sand aber auch Aerosole (in Küstennähe salzhaltige Aerosole) in einen Kollektor eintreten können.

Diese Windfrachten können in die Räume oberhalb und/oder unterhalb des Absorbers gelangen. Sobald Windfrachten im Raum oberhalb des Absorbers sichtbar werden, führt dies zu einer Änderung einer Optik, was zu einer Unzufriedenheit eines Kunden und ggf. zu Leistungseinbußen führen kann. Gelangen die Windfrachten in den Raum unterhalb des Absorbers in das Gehäuse, so können sich die Windfrachten örtlich aufkonzentrieren, was zu Schäden im Kollektor führen kann. Bei Sand ergäbe sich u. U. eine Beeinträchtigung einer Funktion einer Belüftung und bei Salz, z. B. aus Aerosolen in Küstennähe, kann eine korrosive Beanspruchung die Folge sein.

Eine Lösung dieses Problems sollte nicht allein einen Staudruck berücksichtigen, bei welchem ein Vektor einer Windkraft z. B. senkrecht auf einer Öffnung des Gehäuses steht. Durch geometrische Gegebenheiten (Ausführung der Öffnung bzw. der Durchgangsausnehmung (Belüftungseinrichtung), einer Richtung eines Winds etc.) ist damit zu rechnen, dass sich aus dem anströmenden Wind ein Unterdruck an der Öffnung und damit im Kollektor ergibt. D. h. Windfrachten werden nicht nur durch einen Überdruck in den Kollektor gedrückt, sondern können über einen Unterdruck auch in den Kollektor gesogen werden. Eine Konstruktion zu einem Schutz vor eindringenden Windfrachten sollte beide Fälle (Über- und Unterdruck an der Öffnung) berücksichtigen, um die betroffene Durchgangsausnehmung vor einem Durchtritt der Windfrachten zu schützen oder den Durchtritt zu reduzieren.

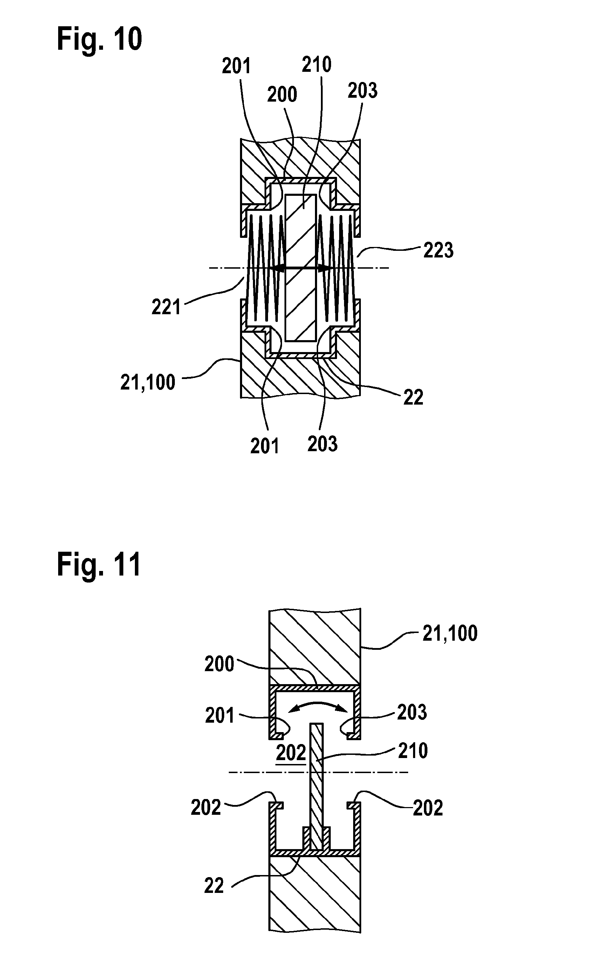

Gemäß der Erfindung wird eine bevorzugt bidirektional wirkende Kollektorbelüftungsvorrichtung 20 mit einer Verschließeinrichtung 210 bzw. einem Verschlusskörper 210 zur zeitweisen Abdichtung des Kollektors 1 vorgeschlagen, die bzw. der federnd gelagert oder selbstfedernd ist (vgl. Fig. 10 und 11). Dabei ist eine Federkraft auf den Verschlusskörper 210 bzw. des Verschlusskörpers 210 derart bemessen, dass das Abdichten bzw. ein Verschließen des Kollektors 1 in eine Richtung nur durch eine Kraft ausgelöst werden kann, welche aus einer Windgeschwindigkeit (Druckdifferenz am Verschlusskörper 210) resultiert, die Windfrachten überhaupt erst ermöglicht. Die Bemessung der Federkraft erfolgt dabei derart, dass eine gewollte Belüftung in Zeiten ohne anstehende Windfrachten im Wesentlichen nicht behindert ist.

Eine Bemessung der Federkraft ergibt sich hauptsächlich durch folgende Zusammenhänge. In einem Normalbetrieb des Kollektors 1 sind die anstehenden Druckdifferenzen an den Öffnungen der Durchgangsausnehmungen 202 für die Belüftung im Wesentlichen ein Resultat einer Konvektionsströmung. Eine daraus resultierende Kraft auf einen Querschnitt ist vergleichsweise klein. Für ein Vermeiden von eintretenden Windfrachten sind die Druckdifferenzen als Resultat aus einem Einwirken von Wind demgegenüber vergleichsweise groß. D. h. für eine Auslegung der Kollektorbelüftungsvorrichtung 20, insbesondere der Verschlusskörper 210, und die Kraft, bei welcher eine Belüftungseinrichtung 202 für Windfrachten zu verschließen ist, ist eine von einer Windstärke abhängige Größe.

Für eine Bemessung der Federkraft bzw. einer bestimmten Kraft wird diejenige Windgeschwindigkeit angesetzt, ab welcher Teilchen in einem größerem Umfang als Windfracht an einer Öffnung einer Belüftungseinrichtung 202 bzw. an den Öffnungen der Belüftungseinrichtungen 202 anliegen können. Feine Stäube werden bereits bei Geschwindigkeiten von kleiner als 50 bis 80 km/h transportiert. Vorgeschlagen wird daher eine Auslegung auf Windgeschwindigkeiten von kleiner als: ca. 80 km/h, ca. 60 km/h, ca. 50 km/h, ca. 45 km/h, ca. 40 km/h, ca. 35 km/h, ca. 30 km/h oder ca. 25 km/h. Ferner kann die Federkraft bzw. die bestimmte Kraft am bzw. auf den Verschlusskörper 210 aus einer Windgeschwindigkeit resultieren, welche größer als: ca. 22,5 km/h, ca. 27,5 km/h, ca. 32,5 km/h, ca. 37,5 km/h, ca. 42,5 km/h, ca. 47,5 km/h oder ca. 52,5 km/h ist.

Die Kollektorbelüftungsvorrichtung 20 ist insbesondere als eine Montageeinheit 20 konzipiert, welche in einem Kollektorgehäuseabschnitt 21 bzw. im Rahmen 2 vorgesehen werden kann. Es ist natürlich möglich, die Montageeinheit 20 auch in der Absorberdurchführung 100 vorzusehen. Bevorzugt ist die Montageeinheit 20 in einer Durchgangsausnehmung 22 im Kollektorgehäuseabschnitt 21 bzw. Rahmen 2 montiert, wobei die Montageeinheit 20 bevorzugt einen Durchmesser von ca. 8 mm bis ca. 20 mm aufweist. Dies ergibt sich aus einem verfügbaren Platzangebot am/im Kollektor 1. Ein Spalt oder Ringspalt der Kollektorbelüftungsvorrichtung 20 zwischen dem Verschlusskörper 210 und einem Sitz 201, 203 bzw. einem Ventilsitz 201, 203 des Verschlusskörpers 210 ist bevorzugt maximal ca. 3 mm breit. Dieses Maß ergibt sich aus einer Zusatzfunktion: Fernhalten von Insekten aus dem Gehäuse 2.

Eine erste Ausführungsform der Kollektorbelüftungsvorrichtung 20 ist in der Fig. 10 dargestellt. Hierbei ist der Verschlusskörper 210 bevorzugt als ein Ventilglied 210 ausgebildet, das von zwei Federn 221, 223, insbesondere Druckfedern 221, 223, bevorzugt im Wesentlichen mittig in einem Rahmen 200 der Kollektorbelüftungsvorrichtung 20 bidirektional wirkend aufgehängt ist. Hierbei ist das Ventilglied 210 in Abhängigkeit der bestimmten Kraft aus dem Wind im Wesentlichen linear hin- und herbewegbar ausgebildet, wobei das Ventilglied 210 bei Erreichen der bestimmten Kraft an einem der beiden Ventilsitze 201, 203 für die Windfracht dichtend zur Anlage bringbar ist. Der Rahmen 200 kann, z. B. mittels eines an ihm ausgebildeten Bunds, Flansches o. ä. derart ausgebildet sein, dass der Rahmen 200 damit in der Durchgangsausnehmung 22 halterbar ist. Ferner kann der Rahmen 200 wie unten ausgebildet sein.

Eine zweite Ausführungsform der Kollektorbelüftungsvorrichtung 20 ist in der Fig. 10 dargestellt. Hierbei ist der Verschlusskörper 210 bevorzugt als eine Ventilplatte 210 ausgebildet, die selbstfedernd bevorzugt im Wesentlichen mittig im Rahmen 200 der Kollektorbelüftungsvorrichtung 20 bidirektional wirkend eingespannt ist. Ein Längsend- und ggf. ein Mittenabschnitt der Ventilplatte 210 sind in Abhängigkeit der bestimmten Kraft aus dem Wind hin- und herschwenkbar ausgebildet, wobei die Ventilplatte 210 bei Erreichen der bestimmten Kraft an einem der beiden Ventilsitze 201, 203 für die Windfracht dichtend zur Anlage bringbar ist. Der Rahmen 200 kann dabei im Wesentlichen zylinderförmig ausgebildet sein. Ferner kann der Rahmen 200 wie oben ausgebildet sein.

Eine bevorzugte Einbauposition ist seitlich im Rahmen 2 des Kollektors 1 in einem Bereich der Anschlüsse für die Hydraulik, d. h. in einem geometrischen Umfeld der Absorberdurchführung 100, z. B. in einem Eckbereich des Kollektors 1 (vgl. Fig. 9), vorzugsweise in einen Bereich bei oder unterhalb eines Materials für einen Wärmeschutz 6. In einer Ausführungsform weist ein einzelner Kollektor 1 zwei bis sechs, insbesondere vier bevorzugt bidirektional wirkende Kollektorbelüftungsvorrichtungen 20 auf. Mit vier bevorzugt im Wesentlichen symmetrisch angeordneten Kollektorbelüftungsvorrichtungen 20 ist eine adäquate Entfeuchtung und das Austreiben von Fogging-Produkten wenigstens ausreichend möglich. - Ferner ist es möglich, die Kollektorbelüftungsvorrichtung 20 als eine monodirektional wirkende Kollektorbelüftungsvorrichtung 20 zu konzipieren.

## Patentansprüche

1. Kollektorbelüftungsvorrichtung (10, 20) für einen Kollektor (1), bevorzugt einen thermischen Solarkollektor (1), zur Wärmeerzeugung, z. B. für eine Warmwasserbereitung und/oder eine Heizungsunterstützung, wobei die Kollektorbelüftungsvorrichtung (10, 20) eine bevorzugt von einem Gehäuse (2) bzw. einem Rahmen (2) des Kollektors (1) unterschiedene Belüftungseinrichtung (102, 202) aufweist, **dadurch gekennzeichnet, dass**
die Kollektorbelüftungsvorrichtung (10, 20) ferner eine Verschließeinrichtung (110, 210) aufweist, mittels welcher die Belüftungseinrichtung (102, 202) verschließbar und wieder freigebbar ist.

2. Kollektorbelüftungsvorrichtung (10, 20) gemäß vorhergehendem Anspruch, **dadurch gekennzeichnet, dass** die Verschließeinrichtung (110, 210) manuell, mittels eines Werkzeugs oder selbsttätig betätigbar ist, wobei
die Belüftungseinrichtung (102, 202) mittels der Verschließeinrichtung (110, 210) vielfach vollständig und/oder teilweise verschließbar bzw. vielfach teilweise und/oder vollständig freigebbar ist.

3. Kollektorbelüftungsvorrichtung (10, 20) gemäß einem der vorhergehenden Ansprüche, **dadurch gekennzeichnet, dass**:
• die Kollektorbelüftungsvorrichtung (10, 20) in eine Absorberdurchführung (100) oder in einen Kollektorgehäuseabschnitt (21) integriert ist;
• die Verschließeinrichtung (110, 210) an/in der Absorberdurchführung (100) oder am/im Kollektorgehäuseabschnitt (21) vorsehbar ist;
• die Belüftungseinrichtung (102, 202) in der Absorberdurchführung (100) oder im Kollektorgehäuseabschnitt (21) einrichtbar ist;
• die Belüftungseinrichtung (102, 202) wenigstens eine Durchgangsausnehmung (103, 202) aufweist; und/oder
• die Verschließeinrichtung (110, 210) keine (210) oder wenigstens eine (110) Belüftungseinrichtung (112) aufweist.

4. Kollektorbelüftungsvorrichtung (10, 20), insbesondere Absorberdurchführung-Belüftungsvorrichtung (10) gemäß einem der vorhergehenden Ansprüche, **dadurch gekennzeichnet, dass**
die Absorberdurchführung (100) die Belüftungseinrichtung (102) aufweist und an der Absorberdurchführung (100) die Verschließeinrichtung (110) vorgesehen ist, mittels welcher die Belüftungseinrichtung (102) verschließbar und wieder freigebbar ist, wobei
die Verschließeinrichtung (110) bevorzugt als eine Einstellscheibe (110) ausgebildet ist, welche in wenigstens einer Nut (101, 109) der Absorberdurchführung (100) bezüglich der Absorberdurchführung (100) verdrehbar aufgenommen ist.

5. Kollektorbelüftungsvorrichtung (10, 20), insbesondere Absorberdurchführung-Belüftungsvorrichtung (10) gemäß einem der vorhergehenden Ansprüche, **dadurch gekennzeichnet, dass**
die Verschließeinrichtung (110) ebenfalls eine Belüftungseinrichtung (112) aufweist, und für ein Belüften des Kollektors (1) die Belüftungseinrichtung (112) der Verschließeinrichtung (110) wenigstens teilweise zur Deckung mit der Belüftungseinrichtung (102) der Absorberdurchführung (100) bringbar ist, wobei
die beiden Belüftungseinrichtungen (102, 112) bevorzugt auf einem im Wesentlichen selben Radius angeordnet sind und sich die jeweilige Belüftungseinrichtung (102, 112) länglich in eine Umfangsrichtung der Verschließeinrichtung (110) und der Absorberdurchführung (100) erstreckt.

6. Kollektorbelüftungsvorrichtung (10, 20), insbesondere Absorberdurchführung-Belüftungsvorrichtung (10) gemäß einem der vorhergehenden Ansprüche, **dadurch gekennzeichnet, dass**
die Absorberdurchführung (100) zwei Belüftungseinrichtungen (102, 102) aufweist, wobei eine Belüftungseinrichtung (102) einer Belüftung eines Raums oberhalb eines Sammelrohrs (5) oder eines Absorbers (4) im Kollektor (1) und eine Belüftungseinrichtung (102) einer Belüftung eines Raums unterhalb des Sammelrohrs (5) oder des Absorbers (4) im Kollektor (1) dient, und
die Verschließeinrichtung (110) wenigstens zwei Belüftungseinrichtungen (112, 112) derart aufweist, dass mittels der Verschließeinrichtung (110) keine, eine oder beide Belüftungseinrichtungen (102, 102) vollständig und/oder teilweise verschließbar bzw. teilweise und/oder vollständig freigebbar sind.

7. Kollektorbelüftungsvorrichtung (10, 20), insbesondere Absorberdurchführung-Belüftungsvorrichtung (10) gemäß einem der vorhergehenden Ansprüche, **dadurch gekennzeichnet, dass**:
• die Absorberdurchführung (100) als ein im Wesentlichen kreisrundes Bauteil ausgebildet ist;
• die Absorberdurchführung (100) aus einem Gummi oder einem mit Gummi vergleichbaren Material hergestellt ist;
• die Absorberdurchführung (100) im Wesentlichen mittig eine Sammelrohrdurchführung (108) aufweist;
• die Verschließeinrichtung (110) aus einem Gummi oder einem mit Gummi vergleichbaren, härteren Material hergestellt ist;
• ein Nutgrund der Nut (101, 109) und ein betreffender Rand der Verschließeinrichtung (110) zueinander komplementäre Verzahnungen aufweisen;
• das Gehäuse (2) bzw. der Rahmen (2) statt der Absorberdurchführung (100) die Belüftungseinrichtung (102) aufweist; und/oder
• die Verschließeinrichtung (110) statt an der Absorberdurchführung (100) am Gehäuse (2) bzw. Rahmen (2) des Kollektors (1) vorgesehen ist.

8. Kollektorbelüftungsvorrichtung (10, 20), insbesondere KollektorgehäuseBelüftungsvorrichtung (20) gemäß einem der vorhergehenden Ansprüche, **dadurch gekennzeichnet, dass**
im Kollektorgehäuseabschnitt (21) die Belüftungseinrichtung (202) vorgesehen ist und am/im Kollektorgehäuseabschnitt (21) die Verschließeinrichtung (210) vorgesehen ist, mittels welcher die Belüftungseinrichtung (202) verschließbar und wieder freigebbar ist, wobei
die Verschließeinrichtung (210) bevorzugt als ein Verschlusskörper (210) ausgebildet ist, welcher in Abhängigkeit einer bestimmten Kraft am Verschlusskörper (210) die Belüftungseinrichtung (202) verschließt bzw. wieder freigibt.

9. Kollektorbelüftungsvorrichtung (10, 20), insbesondere KollektorgehäuseBelüftungsvorrichtung (20) gemäß einem der vorhergehenden Ansprüche, **dadurch gekennzeichnet, dass**
die bestimmte Kraft am Verschlusskörper (210) bevorzugt derart gewählt ist, dass ein Verschließen der Belüftungseinrichtung (202) durch eine Kraft auslösbar ist, welche aus einer Windgeschwindigkeit resultiert, die eine Windfracht ermöglicht, und
die Belüftungseinrichtung (202) und die Verschließeinrichtung (210) bevorzugt in einem im Kollektorgehäuseabschnitt (21) vorsehbaren Rahmen (200) eingerichtet sind.

10. Kollektorbelüftungsvorrichtung (10, 20), insbesondere KollektorgehäuseBelüftungsvorrichtung (20) gemäß einem der vorhergehenden Ansprüche, **dadurch gekennzeichnet, dass**
in Abhängigkeit der bestimmten Kraft am Verschlusskörper (210) der Verschlusskörper (210) an einem Ventilsitz (201, 203) des Kollektorgehäuseabschnitts (21) oder des Rahmens (200) im Wesentlichen oder hauptsächlich dichtend zur Anlage bringbar ist, wodurch
ein Innenraum (3) des Kollektors (1) im Wesentlichen oder hauptsächlich gegen eine Windfracht geschützt ist.

11. Kollektorbelüftungsvorrichtung (10, 20), insbesondere KollektorgehäuseBelüftungsvorrichtung (20) gemäß einem der vorhergehenden Ansprüche, **dadurch gekennzeichnet, dass**
der Verschlusskörper (210) als ein hin- und her bewegbares, bevorzugt bidirektional wirkendes Ventilglied (210) ausgebildet ist, das mittels wenigstens einer Feder (221, 223) gegen einen Ventilsitz (201, 203) mechanisch vorgespannt ist, oder
der Verschlusskörper (210) als eine hin- und her schwenkbare, bevorzugt bidirektional wirkende Ventilplatte (210) ausgebildet ist, die durch eine innere mechanische Spannung gegen einen Ventilsitz (201, 203) mechanisch vorgespannt ist.

12. Kollektorbelüftungsvorrichtung (10, 20), insbesondere KollektorgehäuseBelüftungsvorrichtung (20) gemäß einem der vorhergehenden Ansprüche, **dadurch gekennzeichnet, dass**:
• die Belüftungseinrichtung (202) als eine Durchgangsausnehmung (202) des Kollektorgehäuseabschnitts (21) oder des Rahmens (200) ausgebildet ist;
• der Verschlusskörper (210) als ein monodirektional wirkender Verschlusskörper (210) ausgebildet ist,
• die bestimmte Kraft am Verschlusskörper (210) aus einer Windgeschwindigkeit resultiert, welche kleiner als ca. 80 km/h, kleiner als ca. 60 km/h, kleiner als ca. 50 km/h, kleiner als ca. 45 km/h, kleiner als ca. 40 km/h, kleiner als ca. 35 km/h, kleiner als ca. 30 km/h oder kleiner als ca. 25 km/h ist;
• die bestimmte Kraft am Verschlusskörper (210) aus einer Windgeschwindigkeit resultiert, welche größer als ca. 22,5 km/h, größer als ca. 27,5 km/h, größer als ca. 32,5 km/h, größer als ca. 37,5 km/h, größer als ca. 42,5 km/h, größer als ca. 47,5 km/h oder größer als ca. 52,5 km/h ist;
• das Ventilglied (210) von zwei Federn (221, 223) gegen zwei Ventilsitze (201, 203) mechanisch vorgespannt ist;
• das Ventilglied (210) von den zwei Federn (221, 223) in der Kollektorbelüftungsvorrichtung (10, 20) gelagert ist; und/oder
• die Ventilplatte (210) im Kollektorgehäuseabschnitt (21) oder im Rahmen (200) gelagert, insbesondere eingespannt ist.

13. Kollektor (1), bevorzugt thermischer Solarkollektor (1), zur Wärmeerzeugung, z. B. für eine Warmwasserbereitung und/oder eine Heizungsunterstützung, **dadurch gekennzeichnet, dass**
der Kollektor (1), bevorzugt der thermische Solarkollektor (1), insbesondere ein thermischer Flachkollektor (1), eine Kollektorbelüftungsvorrichtung (10, 20) nach einem der vorhergehenden Ansprüche aufweist.

14. Kollektor (1) gemäß vorhergehendem Anspruch, **dadurch gekennzeichnet, dass**:
• der Kollektor (1) als ein Aufdach- (1), ein Indach- (1), ein Flachdach- (1), ein Ständer- (1), ein Aufständer- (1) oder ein Fassaden-Kollektor (1) ausgebildet ist;
• der Kollektor (1) als ein Mäander-Kollektor, ein Harfen-Kollektor oder ein Kollektor mit einem flächendurchströmten Absorber (4) ausgebildet ist;
• der Kollektor (1) oder ein Bestandteil davon als ein Flachkollektor (1) ausgebildet ist; und/oder
• der Kollektor (1) wenigstens ein Kollektormodul (1), insbesondere wenigstens ein Solarmodul (1), aufweist.
